# EUROPEAN PATENT SPECIFICATION

(11) **EP 2 488 300 B1**
(45) Date of publication and mention of the grant of the patent: **24.02.2016**
(21) Application number: 09850475.6
(22) Date of filing: 16.10.2009
(51) Int. Cl.: C08F 2/22, C08F 292/00, C08F 2/44, G03G 9/13, G03G 9/08, G03G 9/087, G03G 9/093

(54) **PROCESS FOR PRODUCING POSITIVELY CHARGED POLYMER ENCAPSULATED PARTICLES**
VERFAHREN ZUR HERSTELLUNG POSITIV GELADENER POLYMERGEKAPSELTER PARTIKEL
PROCÉDÉ POUR PRODUIRE DES PARTICULES ENCAPSULÉES DANS UN POLYMÈRE CHARGÉ POSITIVEMENT

(43) Date of publication of application: 22.08.2012
(73) Proprietor: Hewlett-Packard Development Company, L.P., Houston, TX 77070 (US)
(72) Inventor: CHUN, Doris Pik-Yiu, Palo Alto, California 94304-1100 (US); NG, Hou T., Palo Alto, California 94034-1100 (US); ZHOU, Zhang-Lin, Palo Alto, California 94304-1100 (US)
(74) Representative: Rogers, Alex Lee
(86) International application number: PCT/US2009/060958
(87) International publication number: WO 2011/046561

(56) References cited:
- EP-A2- 0 743 564
- WO-A1-2011/014198
- US-A- 5 153 093
- US-A- 5 256 516
- US-A- 5 256 516
- US-A1- 2005 018 273
- US-A1- 2005 270 628
- US-A1- 2008 117 498

## Description

### BACKGROUND

Metals, metal oxides, pigments, fillers and other inorganic particulates are broadly used in many applications. However, some of these materials tend to agglomerate and are, thus, often coated with, or encapsulated in, polymers. Such coated or encapsulated particles are used in a wide variety of applications such as electro-conductive additives to plastics, toners in electrophotography, pigmented ink, electrophoretic display as well as many other applications. Moreover, coated or encapsulated particles are often charged in order to help the particles to respond to electric field.

Currently, charged particles, such as electronic ink materials or electrophoretic display materials are mostly negatively charged. However, having a unidirectional charging mechanism often limits the design of devices. Indeed, as an example, when particles are pigments, the negative charge limits device architecture to have stacked layers in order to accommodate multiple colors. Such architecture often results, thus, in that most of the light incident to the display is scattered by the top layers and, therefore, insufficient light reaches the bottom layer which lead thus to low optical density.

Many methods have been proposed to produce such encapsulated particles, such as a coacervation method, an interfacial polymerization method or an in-situ polymerization method. However, investigations continue into developing processes able to form positively charged encapsulated particles. The present disclosure relates thus to a method of effectively producing positively charged particles having a specific particle diameter in a form of a stable dispersion.

US2005/0270628 is directed to an electrophoretic particle including: a pigment particle having an average particle diameter of 1 µm or smaller; and a polymer layer having an average thickness of 1 to 500 nm formed on a surface of the pigment particle, wherein 50% or higher of an entire surface of the pigment particle is coated with the polymer layer.

EP0743564 is directed to a toner for developing an electrostatic image has toner particles containing a binder resin and a colorant. The toner particle has at least a core composed of a low-temperature softening substance, an inner layer enclosing the core, and an outer layer enclosing the core and the inner layer. The core, the inner layer, and the outer layer are constituted respectively of a material which is discriminable by staining with triruthenium tetroxide and triosmium tetroxide.

WO2011/014198 is directed to methods of encapsulating particles in polymer and compositions of matter using such encapsulated particles.

US5256516 is directed to a dry toner composition comprised of resin particles, pigment particles, and a dendrimer charge enhancing additive.

### BRIEF DESCRIPTION OF THE DRAWINGS

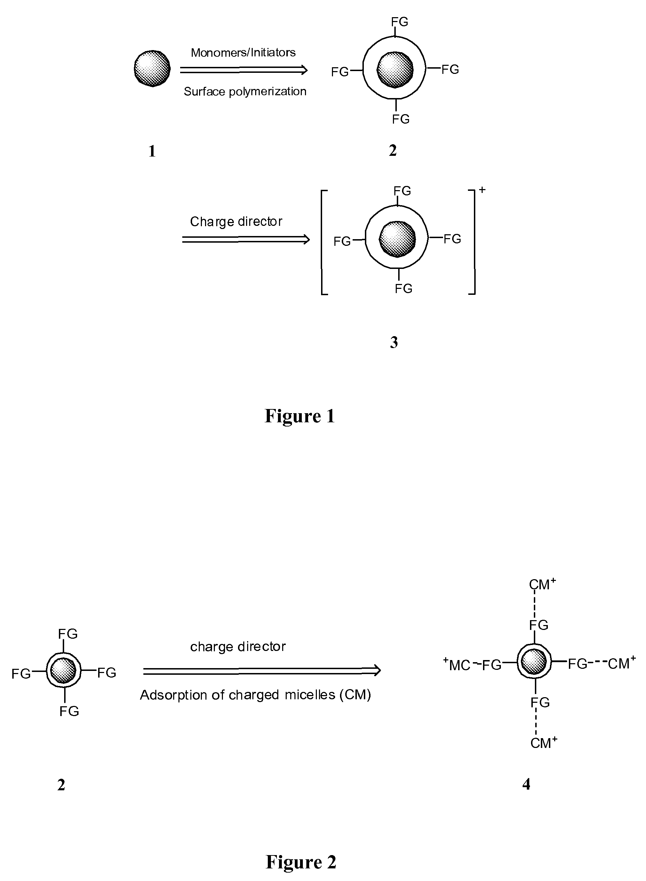

In order to have a better understanding of the invention, some embodiments will be described below by way of non-limiting examples only, wherein Figures 1 and 2 are schematic drawings that illustrate some steps of the process according to embodiments of the present disclosure.

### DETAILED DESCRIPTION

Embodiments of the present disclosure will employ, unless otherwise indicated, techniques of synthetic organic chemistry, ink chemistry and the like, that are within the skill of the art. Such techniques are explained fully in the literature. The following examples are put forth to provide those of ordinary skill in the art with a complete disclosure and description of how to perform the methods disclosed and claimed herein. Efforts have been made to ensure accuracy with respect to numbers (e.g., amounts, temperature, etc.) but some errors and deviations should be accounted for. Unless indicated otherwise, parts are parts by weight, temperature is in °C, and pressure is at atmospheric. Standard temperature and pressure are defined as 20°C and 1 atmosphere. Unless otherwise indicated, the viscosity is measured at a shear rate of 11.1/sec, is expressed in cps and is measured at a temperature of 25°C. Unless indicated otherwise, the percentage (%) of components expresses the weight percentage (wt%) of components.

The present disclosure is drawn to a process for producing a positively charged polymer encapsulated particles, having a size of less than 5 µm, including a positively charged polymer shell surrounding a core of particle. The process includes the steps of:
a) dispersing the particles in an aqueous solution;
b) adding a mixture of monomers either before or after the dispersion step (a);
c) polymerizing monomers, with the particles, in view of obtaining polymer encapsulated particles, wherein the polymer shell of the encapsulated particle includes polymers or co-polymers that have a functional group FG;
d) then dispersing the encapsulated particles with surfactants and charge directors in view of obtaining positively charged encapsulated particles dispersion,
wherein the charge director is an amphiphilic molecule that can form reversed micelle in non-polar solvents, which are hydrocarbon solvents, and gives charge to the particle surface,
and the functional group FG is a functional group selected from the group consisting of alkylated alcohols, branched alkylated alcohols, amine, substituted amine, substituted or unsubstituted pyrrolidine, substituted or unsubstituted 2-pyrroline, substituted or unsubstituted piperidine, substituted or unsubstituted pyridine,substituted or unsubstituted piperazine, substituted or unsubstituted imidazolidine.

The present disclosure also relates to positively charged particles, obtained according to the process described herein, that are suitable for use in liquid electrophotographic printing. The present disclosure relates also to positively charged particles obtained according to the process described herein, that are suitable for use in electrophoretic displays.

As used herein, the term "encapsulate" or "encapsulated" includes partial to complete encapsulation of a particle with a polymer shell. This can be done by adsorption or by reacting the polymer shell on the surface of the particulate.

In accordance with an embodiment of the present invention, the positively charged polymer encapsulated particle, resulting from the process according to the present disclosure, has a size which is between from about 10 nm to about 5 µm in diameter. In another embodiment, the positively charged polymer encapsulated particle, has a size which is between from about 100 nm to about 500 nm in diameter.

In an embodiment, the positively charged polymer encapsulated particle has bulk density ranging from about 0.90 g/cm³to about 3 g/cm³. In an embodiment, the polymer-encapsulated particle has a surface dielectric constant ranging from about 1.5 to about 3.0, at room temperature. In an embodiment, the positively charged polymer encapsulated particle has a surface dielectric constant ranging from about 2.3 to about 2.8. Further, in an embodiment, such a positively charged polymer encapsulated particle can have a calculated Tg from about -40°C to about 125°C. In one embodiment, the calculated Tg can be from about 0°C to about 75°C, and in one aspect, can be from 35°C to about 50°C.

In one embodiment, the positively charged polymer encapsulated particle has a Zeta potential value which is either larger than + 15 mV or less than - 15 mV (millivolts); and, in another embodiment, which is either larger than + 25 mV or less than - 25 mV. In another embodiment, the positively charged polymer encapsulated particle has an average Zeta potential which is either above about + 15 mV or below about - 20 mV. The Zeta potential is the potential across the interface of solids and liquids, and more specifically, the potential across the diffuse layer of ions surrounding a charged colloidal particle which is largely responsible for colloidal stability. Zeta potentials can be calculated from electrophoretic mobility, namely, the rates at which colloidal particles travel between charged electrodes placed in the dispersion, emulsion or suspension containing the colloidal particles, using a Zetasizer instrument (form Malvern Instrument Corp.).

As used herein, the particles can be pigments, quantum dots, colloidal particles or any particulates. In an embodiment of the present disclosure, the particles can be regular or irregular in shape. In another embodiment, the particle size is in the range of about 0.1 nm to about 500 nm in diameter. In another embodiment, the particle size is in the range of about 1 nm to about 250 nm in diameter.

In an embodiment, particles are quantum dots. As quantum dot, it is meant herein nano-crystalline materials having optical properties upon ultraviolet excitation.

In another embodiment, particles are colloidal particles. As colloidal particles, it is meant herein particles which are typically nano-scale solids suspended in a continuous phase.

In another embodiment, particles are pigments. As used herein, "pigment" generally includes organic and inorganic pigment colorants, magnetic particles, aluminas, silicas, and/or other ceramics, organometallics or other opaque particles, whether or not such particulates impart color. Thus, though the present description primarily exemplifies the use of pigment colorants, the term "pigment" can be used more generally to describe not only pigment colorants, but other pigments such as organometallics, ferrites, ceramics, etc. In one embodiment, however, the pigment is a pigment colorant. In an embodiment, the pigment is an organic or an inorganic pigment colorant. Pigments that can be used include self-dispersed pigments, dispersant-dispersed pigments, raw pigments, etc. Self-dispersed pigments include those that have been chemically surface modified with a charge or with a polymeric group. This chemical modification aids the pigment in becoming and/or substantially remaining dispersed in a liquid vehicle. With respect to the other particulates that can be used, examples include semi-metal and metal particulates, semi-metal oxides and metal oxide particulates, dispersible silicates and glass particulates, ferromagnetic and other magnetic particulates, whether or not such particulates impart color.

Though any color or type of pigment can be used, color organic pigments or black carbon pigments are exemplified herein in accordance with embodiments of the present invention. The carbon pigment can be almost any commercially available carbon pigment that provides acceptable optical density and print characteristics. Carbon pigments suitable for use in the present invention include, without limitation, carbon black, graphite, vitreous carbon, charcoal, and combinations thereof. In one aspect of the present invention, the carbon pigment is a carbon black pigment. Such carbon black pigments can be manufactured by a variety of known methods such as a channel method, a contact method, a furnace method, an acetylene method, or a thermal method, and are commercially available from such vendors as Cabot Corporation, Columbian Chemicals Company, Degussa AG and E.I. duPont de Nemours and Company. Alternatively, organic colored pigments can also be encapsulated in accordance with embodiments of the present invention. Exemplary pigments that are suitable for use in accordance with embodiments of the present invention include azo pigments such as azo lake pigments, insoluble azo pigments, and condensed azo pigments; as well as polycyclic pigments such as phthalocyanine pigments, quinacridone pigments, dioxazine pigments, and anthraquinone pigments. In another embodiment, the particles can be red, green, blue, cyan, yellow, magnet, or black colored pigments.

In another embodiment, the particles can be charged pigment particles. The pigments may be white or color, and may be organic or inorganic. Examples of white pigments include hollow particles, BaSO₄, ZnO, CaCO₃, TiO₂ and the like. Examples of color pigments include phthalocyanine blue, phthalocyanine green, diarylide yellow, diarylide AAOT yellow, quinacridone, azo, rhodamine, perylene pigment series from Sun Chemical, Hansa yellow G particles from Kanto Chemical, Carbon Lampblack from Fisher and the like.

In an embodiment, particles can be organic or inorganic solid particles. Examples of such inorganic solid particles are inorganic pigments such as titanium dioxide, zinc oxide, antimony oxide, magnesium oxide, fly ash, red oxide, yellow oxide, lemon chrome and cobalt blue; powders of metals including titanium, copper, brass, gold and stainless steel; carbonates such as calcium and magnesium carbonates; phosphates such as calcium and lead phosphates; silica and silicates such as clay and glass particles; chromates such as lead chromate; metal salts such as silver chloride; inert filler materials such as titanates and talc; ferrites; aluminum hydrates; and the like.

In an embodiment, particles can be powders of metals and metal alloys such as aluminum, cobalt, iron, copper, nickel, chromium, zinc, palladium, silver, ruthenium, platinum, gold, rhodium, lead and alloys of these metals. Also of interest are the oxides of such metals, particularly magnetic oxides such as iron, nickel, cobalt or alloys thereof, as well as oxides of other elements such as titanium dioxide and silica.

In an embodiment, particles are titanium dioxide. In another embodiment, particles are titanium dioxide having an average diameter in the range from about 0.2 µm to about 0.4 µm. In an embodiment, particles are silica in the form of particles having an average diameter from about 0.005 µm to about 0.2 µm. In another embodiment, particles are magnetic iron oxides of the formula Fe₃O₄ which are in the form of finely divided magnetic particles. In yet another embodiment, particles are magnetic iron oxides having an average particle diameter in the range from about 0.005 µm to about 0.1 µm.

In the process according to an embodiment of the present disclosure, the particles are in a first step (a), dispersed in an aqueous solution in view of obtaining aqueous colloidal dispersion of particles. In another embodiment of the present disclosure, the aqueous colloidal dispersion of the particles is prepared by contacting the solid with an aqueous solution of a water-soluble surface active agents or emulsifiers thereby forming a dispersion which contains from about 5 to about 70 weight percent of the solid particles.

In an embodiment, examples of suitable surface active agents or emulsifiers include salts of fatty acids such as potassium oleate, metal alkyl sulfates such as sodium lauryl sulfate, salts of alkyl aryl sulfonic acids such as sodium dodecylbenzene sulfonate, polysoaps such as sodium polyacrylate and alkali metal salts of methyl methacrylate/2-sulfoethyl methacrylate copolymers and other sulfoalkyl acrylate copolymers, and other anionic surfactants such as the dihexyl ester of sodium sulfosuccinic acid; nonionic surfactants such as the nonionic condensates of ethylene oxide with propylene oxide, ethylene glycol and/or propylene glycol; and cationic surfactants such as alkylamine-guanidine polyoxyethanols.

In an embodiment, such surface active agents or emulsifiers are employed in amounts sufficient to provide a stable dispersion of the solid particles in water. In another embodiment, such surface active agents are employed in concentrations in the range of from about 0.2 to about 10, and, in yet another embodiment, in the range of from about 1 to about 6, weight percent based on the aqueous phase.

In another embodiment of the process of the present disclosure, in the step (b), the particles are mixed with monomers either before or either after the dispersion step (a). The dispersion step is done by dispersing the particles or the mixture particles/monomers into a liquid aqueous medium. In an embodiment, the aqueous dispersion of solid particles is combined with the water-immiscible monomers to form an emulsion by normal mixing procedures, for example, by passing both the dispersion and monomers through a high shear mixing device such as a Waring blender, homogenizer or ultrasonic mixer. Alternatively, in another embodiment, the mixture of monomers is added continuously to the aqueous dispersion of solid particles during the polymerization step. In an embodiment, the monomers are in the form of an aqueous emulsion of monomers which emulsion is maintained by water-soluble monomers and/or water-soluble emulsifiers such as described hereinbefore.

In another embodiment, the aqueous emulsion of particles and water-immiscible monomers can be prepared by adding colloidal particles to an existing aqueous emulsion of monomers. In such instances, it is often desirable to add additional emulsifiers to the emulsion prior to or simultaneous with the addition of the solid particles. In the emulsion of solid particles and water-immiscible monomers, the aqueous phase is present in a proportion sufficient to be the continuous phase of the emulsion. The solid particles are present in proportions sufficient to provide the matrix particulate, with the desired characteristics, e.g., magnetic properties, pigmentation, etc. In an embodiment, the water-immiscible monomers are present in proportion sufficient to enclose or encapsulate the particulates when polymerized and sufficient emulsifiers and/or surface active agents are present in order to provide an aqueous colloidal emulsion which is sufficiently stable to be subjected to emulsion polymerization conditions. In an embodiment, the emulsion contains from about 0.1 to about 25 weight percent of solid particles. In another embodiment, the emulsion contains from about 1 to about 30 weight percent of monomers and a remaining amount of the aqueous phase including emulsifiers (surfactants), catalyst and the like.

In an embodiment, the present disclosure relates to a method of encapsulating particles including the step (a) of dispersing particles in an aqueous solution to form particles dispersion, adding monomers, in the step (b), either before or after the dispersion step (a), and polymerizing the monomers to form encapsulated particles in the step (c).

Thus, in another embodiment, the present disclosure relates to a method of encapsulating particles including the step of mixing particles with monomers in view of forming a paste or a paste-like solid; dispersing the paste in an aqueous solution to form a dispersion, and polymerizing the monomers in the presence of particles to form encapsulated particles.

In another embodiment, the present disclosure relates to a method of encapsulating particles including the step of dispersing particles in an aqueous solution to form particles dispersion; adding monomers to the dispersion and polymerizing the monomers, in the presence of particles, to form encapsulated particles.

In an embodiment, the polymerization step (c) is carried out in the presence of a radical initiator. It is believed that such initiator helps generating the polymer on the surface of the particles. In an embodiment, during the polymerization step, water insoluble initiators are added to the monomer mixture to avoid phase separation. In another embodiment, water insoluble initiators are added to the mixture, for easy handling, just before the beginning of the polymerization step.

In an embodiment, the polymerization step (c) is carried out in the presence of an initiator at temperatures in the range of from about 50°C to about 90°C. The emulsion can be agitated during the polymerization period in order to maintain adequate feed transfer. In an embodiment, the concentration of initiators is in the range from about 0.005 to about 8 weight percent, in another embodiment, from about 0.01 to about 5 weight percent, based on total amount of monomers.

Such initiators can be water miscible or immiscible radical generators, including diazocompounds, peroxides and redox initiators. In another embodiment, the initiator can be any radical initiator such as a peroxygen compound, an azo catalyst, ultraviolet light and the like. Examples of suitable catalysts include inorganic persulfate compounds such as sodium persulfate, potassium persulfate, ammonium persulfate; peroxides such as hydrogen peroxide, t-butyl hydroperoxide, dibenzoyl peroxide and dilauroyl peroxide; azo catalysts such as azobisisobutyronitrile, and other common free-radical generating compounds. Also suitable are various forms of free-radical generating radiation means such as ultraviolet radiation, electron beam radiation and gamma radiation. Alternatively, a redox catalyst composition can be employed wherein the polymerization temperature ranges from about 25°C to about 80°C. Exemplary redox catalyst compositions include a peroxygen compound, in an embodiment, potassium persulfate or t-butyl hydroperoxide and a reducing component such as sodium metabisulfite and sodium formaldehyde hydrosulfite. In another embodiment, the polymerization process is carried out using a water-soluble polymerization initiator such as potassium persulfate, sodium persulfate, ammonium persulfate, 2,2'-azobis(2,4-dimethylvaleronitrile), 2,2'-azobis(2-methylpropionamidine)dihydrochloride, and hydrogen peroxide. These polymerization initiators may be used alone, or two or more kinds of them may be used in combination.

In an embodiment of the process according to the present disclosure, monomers are added to the aqueous dispersion of particles for the polymerization step (c). In an embodiment, the monomers are hydrophobic monomers. In an embodiment, the monomers are organic monomers. In another embodiment, the monomers are acrylic or methacrylic monomers. In another embodiment, the monomers are linear, branched or cyclic aliphatic acrylate monomers. Examples of linear, branched or cyclic aliphatic acrylate monomers include ethyl, propyl, iso butyl, butyl, tertiary butyl, pentyl, hexyl, heptyl, octyl, nonyl, decyl, dodecyl, octadecyl, 2-ethylhexyl, lauryl, cyclohexyl acrylates or t-butylcyclohexyl monomers.

In an embodiment, the monomers are functional monomers such as 2-hydroxylethyl, 2-hydroxylpropyl, 2-hydroxylbutyl, dimethylaminoethyl, glycidyl, butanediol, 2-carboxylethyl, 2-ethoxyethyl, di(ethylene glycol methyl ether, ethylene glycol methyl ether, ethylene glycol phenyl ether, 2-(4-benzoyl-3-hydroxyphenoxy)ethyl, 2-(dialkylamino)ethyl, 2-(dialkylamino)propyl, 2-[[(butylamino)carbonyl]-oxy]ethyl, 2-hydroxyl-3-phenoxypropyl, 3,5,5-trimethylhexyl, 3-(trimethyloxysilyl)propyl, 3-sulfopropyl, di(ethylene glycol)-2-ethylhexyl ether, dipentaerythritol penta/hexa, ethyl 2-(trimethylsilylmethyl), ethyl-2-(trimethylsilylmethyl), alkylcyano or ethylene glycol dicyclopentenyl ether acrylate monomers.

In another embodiment, the monomers of the present disclosure include a mixture of hydrophobic and acidic monomers. In an embodiment, the hydrophobic monomers are present in an amount representing up to 99 wt% of the total amount of monomers forming the polymer shell. In another embodiment, the hydrophobic monomers are present in an amount representing from about 70 wt% to about 98 wt% of the total amount of monomers forming the polymer shell.

In an embodiment, hydrophobic monomers contain free-radically polymerizable vinyl groups. In another embodiment, the hydrophobic monomers are acrylate, methacrylate or other vinyl-containing monomers such as styrene. Examples of hydrophobic monomers include methyl methacrylate, methyl acrylate, ethyl methacrylate, propyl methacrylate, butyl methacrylate, hexyl methacrylate, 2-ethylhexyl methacrylate, lauryl methacrylate, octadecyl methacrylate, isobornyl methacrylate, vinyl acetate, methyl acrylate, ethyl acrylate, propyl acrylate, butyl acrylate, hexyl acrylate, 2-ethylhexyl acrylate, lauryl acrylate, octadecyl acrylate, isobornyl acrylate, styrene, methylstyrene, vinylbenzyl chloride, butyl vinyl ether monomers and combinations thereof.

Examples of suitable acidic monomers include acrylic acid, methacrylic acid, methacryloyloxyethyl succinate or phosphate, itaconic acid, maleic acid, vinyl benzoic acid, styrene sulfonate sodium salt monomers, derivatives thereof and combinations thereof.

Without being bound by the theory, it is believed that the acidic monomers may provide stability to the polymer shell of the encapsulated particles so that they are stable in water. More particularly, the acidic monomers incorporate charges to the polymer shell, which contribute to their stability. The charge of particle may be further enhanced by raising the pH of the medium on which the encapsulated particle will be established to convert -COOH functional groups of the acid into a salt form. In an embodiment, other monomers, that can increase the stability, might be present in the polymer shell of the encapsulated particle, which include acrylamide and vinylpyrrolidone monomers.

In an embodiment, of the present invention, the concentration of monomer components is from 0.5% to 25% by weight, based on the total weight of the aqueous solution. In another embodiment, the concentration of monomer components is from 5% to 10% by weight, based on the total weight of the aqueous solution.

In an embodiment, it is believed that when the concentration of monomer components is lower than 5% by weight, the polymerization reaction cannot rapidly proceed, so that a sufficiently high polymerization rate cannot be obtained. In contrast, when the concentration of monomer components is higher than 10% by weight, particles made only of a polymer may easily be produced at a place other than the surfaces of particles (i.e., in a solvent), so that a polymer layer cannot effectively be formed on the surface of each particles. The total amount of monomer components is the total amount of monomer components which have been added to a solvent until the completion of a polymerization reaction. In an embodiment, in the polymerization step (c), the mixture has a monomer to particle ratio of from about 0.25:1 to about 5:1. In one embodiment, the monomer to particle ratio is from about 0.5:1 to about 3:1. In another embodiment, the monomer to particle ratio is from about 1:1 to about 3:1.
In an embodiment, the monomers described herein can be of any number of compounds and are capable of forming a polymer or a co-polymer having a functional group "FG". FG is a functional group selected from the group consisting of alkylated alcohols, branched alkylated alcohols, amine, substituted amine, substituted or unsubstituted pyrrolidine, substituted or unsubstituted 2-pyrroline,substituted or unsubstituted piperidine, substituted or unsubstituted pyridine,substituted or unsubstituted piperazine, substituted or unsubstituted imidazolidine. In an embodiment, the monomers described herein can be polymerized in situ to form polymers or co-polymers that have a basic or a neutral functional group "FG". Thus, in the process according to embodiments of the present invention, the polymerization step (c) results in polymer encapsulated particles wherein the polymer shell of the encapsulated particles includes a polymer or co-polymer that has a specific basic or neutral functional group FG. The specific functional group FG represents a functional group that will interact with a charge director to give positive charge to the particle surfaces, or any functional group that will absorbs the positively charged micelles to the particle surfaces.

In an embodiment, the mixture of monomers encompass between about 1 and about 15 weight percent of monomers capable of forming polymer containing FG group, based on the total amount of monomers forming the encapsulation layer.

In an embodiment, the monomers are selected from the group consisting of N-vinyl amide monomers, heterocyclic vinyl amine monomers, aminoacrylate and methacrylate monomers, acrylamide monomers and derivatives.

Examples of N-vinyl amide monomers include N-methyl N-vinyl acetamide, N-vinyl acetamide, N-vinyl formamide and N-vinylmethacetamide. Examples of N-vinyl amide monomers include also N-vinyl cyclic amide, such as N-vinylpyrrolidone and N-vinyl-3-morpholinone monomers. Examples of heterocyclic vinyl amine monomers include N-vinylpyridine, N-vinyloxazolidine, N-vinylpyrimidine, N-vinylpyridazine, N-vinyl-1,2,4-triazine, N-vinyl-1,3,5-triazine, N-vinyl-1,2,3-triazine, N-vinyl-triazole, N-vinyl-imidazole, N-vinylpyrrole and N-vinylpyrazine. Examples of aminoacrylate and methacrylate monomers include N,N-dimethylaminoethyl methacrylate, N,N-dimethylaminoethyl acrylate, N,N-dimethylaminopropyl methacrylate, N,N-dimethylaminopropyl acrylate, N,N-dimethylacrylamide, N,N-dimethylmethacrylamide, N,N-dimethyl-amino-ethylacrylamide, N,N-dimethyl-amino-ethylmethacrylamide, N,N-dimethyl-amino-propylacrylamide and N,N-dimethyl-amino-propyl-methacrylamide monomers. Examples of acrylamide monomers include N-alkyl acrylamide, N-aryl acrylamide and N-alkoxyalkyl acrylamide monomers, as such N-methyl acrylamide, N-ethyl acrylamide, N-butyl acrylamide, N,N-dimethyl acrylamide, N,N-dipropyl acrylamide, N-(1,1,2-trimethylpropyl) acrylamide, N-(1,1,3,3-tetramethylbutyl) acrylamide, N-methoxymethyl acrylamide, N-methoxyethyl acrylamide, N-methoxypropyl acrylamide, N-butoxymethyl acrylamide, N-isopropyl acrylamide, N-s-butyl acrylamide, N-t-butyl acrylamide, N-cyclohexyl acrylamide and N-(1,1-dimethyl-3-oxobutyl) acrylamide monomers.

In an embodiment, the functional group "FG" is either a basic or a neutral functional group. In an embodiment, basic functional groups can be, but are not limited to, trialkyamine R₁R₂N-, wherein R₁ R₂ can be, independently, any alkyl or branched alkyl groups, which include, but are not limited to, hydrogen, methyl, ethyl, propyl, isopropyl, butyl, iso-butyl, n-octyl, n-decyl, n-dodecyl and n-tetradecyl groups.

In another embodiment, the functional group FG is a functional group selected from the group consisting of amine, substituted amine, substituted or unsubstituted pyrrolidine, substituted or unsubstituted 2-pyrroline, substituted or unsubstituted piperidine, substituted or unsubstituted pyridine, substituted or unsubstituted piperazine, substituted or unsubstituted imidazolidine.

In another embodiment, examples of functional group FG include alkylated alcohols or branched alkylated alcohols. In another embodiment, the functional group FG is an alcohol containing monomer, such as acrylate and methacrylate monomer. In another embodiment, the functional group FG is ethylene glycol containing acrylate and methacrylate monomer or polyethylene glycolated methacrylates monomer.

In an embodiment, the functional group FG is an alcohol containing monomer such as 2-hydroxyethyl acrylate, 2-hydroxyethyl methacrylate, hydroxypropyl acrylate, hydroxypropyl methacrylate, 3-hydroxypropyl-1-methyl acrylate, 3-hydroxypropyl-1-methyl methacrylate, 4-hydroxybutyl acrylate or 4-hydroxybutyl methacrylate monomer.

Examples of functional group FG include ethylene glycol containing acrylate and methacrylate monomer such as polyethylene glycolated acrylate, polyethylene glycoldi(meth)acrylate, ethylene glycol di(meth)acrylate, triethylene glycol di(meth)acrylate and tetraethylene glycol di(meth)acrylate monomer. Others examples of functional group FG include polyethylene glycolated methacrylate monomer such as methylacrylamide glycolate methylether, polyethylene glycol mono(meth)acrylate, methoxypolyethylene glycol mono(meth)acrylate, octoxypolyethylene glycol mono(meth)acrylate and stearoxypolyethylene glycol mono(meth)acrylate monomer. In another embodiment, the functional group FG can be the combinations of two or more of the above mentioned monomer compounds.

Therefore, in an embodiment, the polymerization step (c) results in a polymer encapsulated particle which includes a particle core and a polymer shell. The polymer shell contains polymers or co-polymers that have a functional group FG. In an embodiment, the percentage of FG group presents on the polymer shell of the encapsulated particle represents from about 0.1 % to about 20%, in another embodiment from 0.5% to 10%, of the total weight of the encapsulating polymers or co-polymers. Thus, in an embodiment, the polymer-encapsulated particle includes a particle core and a polymer shell, such polymer shell includes a polymer or a co-polymer that has, as an example, substituted amines, alkylated alcohols or branched alkylated alcohols as FG groups.

By "polymer shell", it is meant herein a layer of polymer or co-polymer that is deposited on or attached to the surface of a particle, or alternatively, is attached to an intermediate bridging layer which is deposited on the surface of the particle. This polymer shell can be attached or deposited on the particle or on a bridging layer deposited on the particle. If an environmentally sensitive bridging layer is used, once the polymer encapsulation shell or layer is formed, the change of the environmental conditions that brought about the formation of the bridging layer is often of little consequence, and the polymer encapsulation shell acts to protect the bridging layer from becoming substantially resolubilized. It is noted that in accordance with embodiments of the present invention, the polymer encapsulation shell is applied as a mixture of monomers, and then once on the surface of the particle (or bridging layer), the monomers are polymerized and newly polymerized monomers form the polymer encapsulation shell.

The thickness of the polymer shell can be of any suitable thickness. However, in an embodiment, the polymer shell has an average thickness ranging from about 2 nm to about 100 nm. In another embodiment, the polymer shell has an average thickness ranging from about 20 nm to about 80 nm. Suitable polymers can have any weight average molecular weight that is functional, but in one embodiment, the average molecular weight is from 5,000 Mw to 2,000,000 Mw. In another embodiment, the average molecular weight is from 25,000 Mw to 500,000 Mw. In an embodiment, the polymer shell of the present invention is prepared by mixing monomers together to form a monomer mixture and then polymerizing such mixture.

In an embodiment of the process of the present disclosure, following the polymerization step (c), the resulting emulsion polymerization can be withdrawn from the polymerization vessel and the obtained polymer encapsulated particles emulsions are directly dispersed with surfactants and charge directors, in a step (d), in view of obtaining positively charged encapsulated particles dispersion.

In another embodiment, the non-reacted monomers and other volatiles are removed to form a concentrated emulsion containing polymer encapsulated particles. Such concentrated emulsion is then dispersed with surfactants and charge directors in view of obtaining positively charged encapsulated particles dispersions. In yet another embodiment, the matrix particulate, containing polymer encapsulated particles, can be separated from the aqueous continuous phase of the dispersion by conventional means such as drying under vacuum. The dried matrix particulate containing polymer encapsulated particles contains, in an embodiment, from about 1 to about 70 weight percent of solid particles and from about 99 to about 30 weight percent of polymer matrix. Such dried matrix particulate containing polymer encapsulated particles is then dispersed with surfactants and charge directors in view of obtaining positively charged encapsulated particles dispersion.

Thus, in an embodiment, the process for producing polymer encapsulated particles according to the present disclosure, encompass as a final step (d), the step of dispersing the encapsulated particles, including a polymer shell with FG group, with surfactants and charge directors in view of obtaining positively charged encapsulated particles dispersion.

In an embodiment, after the polymerization step (c), the resulting polymer encapsulated particles are freeze dried and re-dispersed in a non-aqueous solution containing dispersants and charge directors.

The charge director is defined herein as any amphiphilic molecule that can form reversed micelle in non-polar solvents, which are hydrocarbon solvents, and gives charge to particle surface. In an embodiment, the charge director gives positively charge to the encapsulated particle. In an embodiment, the charge director may form a micelle structure which is physically associated, but not chemically associated, by hydrophobic bonding with the particle to provide at least part of the particle charge.

According to an embodiment of the present invention, charge directors may be polymeric or non-polymeric in nature and may also be ionic or non-ionic, including ionic surfactants such as Aerosol OT, sodium dodecylbenzene sulfonate, metal soap, calcium petronate, OLOA^{®}1200 (from Chevron Oronite Company), Emphos^{®}D-70-30C (a phosphated mono/diglyceride from Witco Chemical Co.), Solsperse^{®}17000 (a polymeric dispersant from Lubrizol Inc.), Span surfactants (from ICI Americas Inc.), polybutene succinimide, maleic anhydride copolymers, vinylpyridine copolymers, vinylpyrrolidone copolymers (such as Ganex from International Specialty Products), acrylic or methacrylic acid copolymers, N,N-dimethylaminoethyl methacrylate or acrylate copolymers or the like.

According to another embodiment of the present invention, charge directors may be organic acid metal salts consisting of polyvalent metal ions and organic anions as the counterion. Non-limiting examples of suitable metal ions include Ba(II), Ca(II), Mn(II), Zn(II), Zr(IV), Cu(II), Al(III), Cr(III), Fe(II), Fe(III), Sb(III), Bi(III), Co(II), La(III), Pb(II), Mg(II), Mo(III), Ni(II), Ag(I), Sr(II), Sn(IV), V(V), Y(III), and Ti(IV). Non-limiting examples of suitable organic anions include carboxylates or sulfonates derived from aliphatic or aromatic carboxylic or sulfonic acids. In an embodiment, aliphatic fatty acids are stearic acid, behenic acid, neodecanoic acid, diisopropylsalicylic acid, abietic acid, naphthenic acid, octanoic acid, lauric acid, tallic acid, and the like.

According to another embodiment, charge directors are polymers or copolymers having nitrogen-containing monomer, quaternary ammonium block copolymers, lecithin, basic metallic petronates such as basic barium petronate, basic calcium petronate, and basic sodium petronate, metal naphthenate compounds, and polyisobutylene succinimide available as OLOA^{®}1200 (from Chevron Oronite Company), and the like. Specific examples for the nitrogen-containing monomer are (meth)acrylates having an aliphatic amino group, vinyl monomers having nitrogen-containing heterocyclic ring, cyclic amide monomers having N-vinyl substituent, (meth)acrylamides, aromatic substituted ethlylenic monomers having nitrogen-containing group, nitrogen-containing vinyl ether monomers, etc. In an embodiment, examples of charge directors include a copolymer which is soluble in a hydrocarbon carrier liquid and which contain a monomer such as hexyl (meth)acrylate, cyclohexyl (meth)acrylate, 2-ethylhexyl (meth)acrylate, octyl (meth)acrylate, nonyl (meth)acrylate, decyl (meth)acrylate, dodecyl (meth)acrylate, lauryl (meth)acrylate, stearyl(meth)acrylate, vinyl laurate, vinyl stearate, benzyl (meth)acrylate and pheny (meth)acrylate. According to another embodiment of the present disclosure, charge directors are lecithin, basic metallic petronate and polyisobutylene succinimide. In an embodiment, the charge director is a mixture of different charge directors and contains, as an example, 30 parts by weight lecithin, 30 parts by weight Basic Barium Petronate (BBP) and 6 parts by weight isopropylamine dodecylbenzesulfonate (ICI G3300B) as a stabilizer.

In another embodiment, the charge directors are polyisobutylene succinimide amines. Example of polyisobutylene succinimide amine includes OLOA^{®}11000 (available from Chevron Oronite). In another embodiment, the charge directors are ionizable charge directors that can disassociate to form charges such as sodium di-2-ethylhexylsulfosuccinate or dioctyl sulfosuccinate (AOT). In another embodiment, the charge directors are zwitterions charge directors such as lecithin. In another embodiment, the charge directors are non-chargeable and neutral charge directors, which cannot disassociate or react with acid or base to form charge such as fluoro-surfactants.

In another embodiment of the process of the present disclosure, polymer encapsulated particles including FG groups are dispersed in a solution containing charge directors. In an embodiment, the presence of such charge directors results in the formation of positively charged micelles (CM+). Such encapsulated particles, including FG groups, interact with positively charged micelles (CM+) in view of forming positively charged polymer encapsulated particles dispersion. Without being linked by any theory, it is believed that such positively charged micelles are adsorbed to the surface of polymer encapsulated particles.

As charged micelles (CM+), it is meant herein positively charged micelles formed from disproportionation reaction of micelles, which in turn are formed by charge directors. In an embodiment, charged micelles are positively charged OLOA^{®} micelles, i.e., micelles formed by the addition of OLOA^{®}11000 (available from Chevron Oronite).

In an embodiment of the present invention, the resulting positively charged polymer encapsulated particles are dispersed in solvent, such as for example, Isopar-L^{®} (available for Exxon). In an embodiment, such final dispersion includes also surfactants. The surfactants used herein are surfactants that can be soluble or partially soluble in solvents such as isoparaffinic solvents (such as Isopar-L^{®} or Isopar-G^{®}). Such surfactants allow charged polymer encapsulated particles to be dispersed and/or stabilized in a solvent medium.

In an embodiment, such surface active agents are employed in concentration in the range of from about 0.2 to about 10 weight percent; in another embodiment, in the range of from about 1 to about 6 weight percent based on the total weight of the dispersion.

Examples of such surfactants includes hyperdispersants such as Solsperse^{®}3000, Solsperse^{®}8000, Solsperse^{®}9000, Solsperse^{®}11200, Solsperse^{®}13840, Solsperse^{®}16000, Solsperse^{®}17000, Solsperse^{®}18000, Solsperse^{®}19000, Solsperse^{®}21000 or Solsperse^{®}27000 available from Lubrizol Advanced Materials Inc. Others examples include dispersants, available from BYK Inc., such as BYK^{®}-110, BYK^{®}-163, BYK^{®}-170, BYK^{®}-180. Others examples include dispersants, available from Evonik Industries AG, such as Tego^{®}Dispers 630, Tego^{®}Dispers 650, Tego^{®}Dispers 651, Tego^{®}Dispers 655, Tego^{®}Dispers 685 and Tego^{®}Dispers 1000. Others examples include dispersants, available from Aldrich Inc., such as Span^{®} 20, Span^{®} 60, Span^{®} 80 and Span^{®} 85.

Thus, in an embodiment of the present disclosure, the process for producing positively charged polymer encapsulated particles includes as a first step, mixing particles with monomers and with radical initiators. In another embodiment, the process includes the steps of, firstly, mixing colored pigments with acrylic monomers and with radical initiators. The resulting mixture is then submitted to a mechanical mixing. In an embodiment, such mixing step is done in an aqueous composition containing from 1 to 80 weight percentage of dispersants and/or surfactants. In an embodiment, the resulting dispersion is then allowed to pass through a high pressure micro-fluidizer and is then cooled until the desired dispersion stability is achieved. Then, once a stable dispersion is formed, in an embodiment, the solution is collected in a chemical reactor equipped with a stirring mechanism and a reflux condenser. In another embodiment, the reactor can be purged with inert gas prior to thermal initiation at a temperature ranging between 50°C to 90°C for 5 to 14 hours or until the polymerization is complete. In an embodiment, once the solution temperature has reached a temperature below about 30°C, the stirring is stopped and the solution is allowed to drain through a 10 to 100 micron screen into a storage bottle, as an example. In an embodiment, the final solution is then subject to lypholization to remove water. In an embodiment, the obtained powder is redispersed in appropriate hydrocarbons solvent such as Isopar-L^{®} or Isopar-G^{®} (isoparaffinic solvent available for Exxon) or other appropriate organic medium, with appropriate charge directors and with additional surfactants by milling, microfluidizing or ultrasonic techniques.

As illustrated in Figure 1, in an embodiment of the process according to the present disclosure, a particle (1) is dispersed in an aqueous solution containing monomers and initiators. Such particle (1) is then polymerized in surface with polymer or co-polymer containing a function group FG. Such polymerizing step result thus in a polymer encapsulated particle (2) including a particle core and a polymer shell with function group FG. The polymer encapsulated particle (2) is then dispersed with appropriate surfactants and with appropriate charge directors in view of obtaining a positively charged polymer encapsulated particle (3) in dispersion in the liquid medium.

As illustrated in Figure 2, in an embodiment of the process according to the present disclosure, the polymer encapsulated particle (2), containing functional group FG on the surface of encapsulated particle, is dispersed in an solution containing charge directors in the form of charged micelles (CM). Such polymer encapsulated particle, containing functional group FG, interacts with charged micelles and results, thus, in a positively charged polymer encapsulated particle (4).

In an embodiment of the present disclosure, the positively charged particles obtained according to the above disclosed process are suitable for many applications. As an example, positively charged encapsulated particles are suitable for inkjet compositions, electrophotographic printing compositions and electrophoretic display applications.

In an embodiment, the positively charged encapsulated particles are suitable for use in liquid electrophotographic printing and electrophoretic display. In an embodiment, when used in electrophoretic display, the positively charged encapsulated particles obtained according to the process described herein, are dispersed in, at least, one liquid system.

In another embodiment, when used in electrophotographic printing composition, the positively charged encapsulated particles obtained according to the process described herein, are used as pigmented toner particles and are dispersed in carrier liquid of liquid toners.

In an embodiment, as an example, when used in liquid electrophotographic inks, the positively charged encapsulated particles are in the form of positively charged CMYKW (cyan, magenta, yellow, black and white) pigments.
The following examples illustrate the embodiments of the invention that are presently best known. However, it is to be understood that the following is only exemplary or illustrative of the application of the principles of the present invention.

### Example 1: formulation of positively charged blue pigments suspension

20 g of a phthalocyanine blue pigment (Heliogen^{®} Blue D7079 pigment, from BASF) are mixed with 40 g of an acrylic monomer mixture containing styrene, hexyl acrylate, methylmethacrylic acid and ethylene glycol dimethacrylate monomers, in the ratio of 20/73/6/1, and with 0.25 g of azobisisobutylnitrile (radical initiator) in an one liter Erlenmeyer flask. The resulting mixture is agitated with the aid of a magnetic stir bar at 300 rpm, in a 500 mL aqueous solution containing from 3 g. of sodium dodecylsulfate and 2 g. of surfactant (Dowfax^{®}30599 available from Dow Chemicals). The resulting dispersion is, then, passed through a high pressure micro-fluidizer for 30 minutes, at 240 mL/min, at 80 psi gauge pressure. The dispersion is then cooled at a temperature ranging between 0°C and 10°C in view of obtaining a stable dispersion. The solution is collected in a chemical reactor equipped with a stirring mechanism and a reflux condenser. The reactor is then purged with inert gas prior to thermal initiation at a temperature of about 60°C for about 10 hours. When the solution temperature has reached a temperature which is below 30°C, the stirring is stopped and the solution is allowed to drain through a 50 micron screen. The water is then removed by lypholization. The resulting powder is, then, redispersed in Isopar-L^{®}with appropriate charge director (lecithin) and with additional surfactant (Tego^{®}Dispers 630available from Evonik Industries AG). Such dispersion is done by ultrasonic techniques, in view of obtaining a solution containing between about 2 and about 10 wt% of particles and about 2 and about 6 wt% of surfactants.

The obtained positively charged encapsulated particles are in the form of a dispersion of positively charged encapsulated blue pigments. The size of the obtained particles is of about 900 nm. The zeta potential of the obtained particles is of about +16 mV. The positively charged encapsulated blue pigments are responsive to external electric field. Zeta potential of the charged encapsulated particles is measured in Isopar^{®}L, using Zetasizer (Nano Series) Model ZEN3600, supplied by Malvern Instruments.

### Example 2: Formulation of positively charged black pigments suspension

To 12 g of a pigment (Degussa^{®} XPB-306) is added 10 mL of acrylic monomers containing 200 mg of azobisisobutylnitrile, 25 µL of dodecylmercaptan and Solsperse^{®}3000 dispersant (0.1 %). The mixture is then blended thoroughly into a paste and is subsequently incorporated into a surfactant solution. Such surfactant solution is composed of water (280 mL), disulfonate surfactant (2%) and of an ethyoxylated nonionic surfactant (3.6%). The incorporation step is done by microfluidization at 3.3 kpsi. The homogenous dispersion is thus collected into a reaction vessel equipped with a stirring mechanism, a water condenser and an inert gas inlet. The polymerization of monomers is processed at 85°C overnight. Upon completion of the polymerization step, the reaction mixture is allowed to cool to room temperature and screened with a 50 micro sieve into a storage bottle to afford 250 mL of encapsulated carbon black pigments. The pH of the composition containing the encapsulated carbon black pigments is further adjusted to pH 9 - 10 by addition of 2M potassium hydroxide. Then, a mixture containing encapsulated carbon black pigments (3%), charge director OLOA^{®}11000 (3%) and Solsperse^{®}8000 dispersant (1%) is mixed in Isopar^{®}L (available for Exxon) solvent and is dispersed by milling techniques. The positively charged encapsulated particles obtained are positively charged encapsulated black pigments in dispersion. The size of the obtained particles is of about 345 nm. The zeta potential of the obtained particles is of about + 23.8 mV. The positively charged encapsulated black pigments present a nice device switching behavior in in-plane testing cell.

### Example 3: Formulation of positively charged cyan pigments suspension

12 g of a pigment (Heliogen^{®}Blue D7086 pigment, from BASF) is added to 10 mL of acrylic monomers containing 200 mg of azobisisobutylnitrile, 25 µL of dodecylmercaptan and Solsperse^{®}3000 dispersant (0.1%). The mixture is then blended thoroughly into a paste and is subsequently incorporated into a surfactant solution. Such surfactant solution is composed of water (280 mL), disulfonate surfactant (2%) and of an ethyoxylated nonionic surfactant (3.6%). The incorporation step is done by microfluidization at 3.3kpsi. The homogenous dispersion is thus collected into a reaction vessel equipped with a stirring mechanism, a water condenser and an inert gas inlet. The polymerization of monomers is preceded at 85°C overnight. Upon completion of the polymerization step, the reaction mixture is allowed to cool at room temperature and screened with a 50 micro sieve into a storage bottle to afford 250 mL of encapsulated carbon black pigments. The pH of the composition containing the encapsulated carbon black pigments is further adjusted to pH 9 - 10 by addition of 2M of potassium hydroxide. Then, a mixture containing the encapsulated cyan pigment suspension (3%), charge director OLOA^{®}11000 (3%) and Solsperse^{®}19000 dispersant (1%) (from Lubrizol Advanced Materials Inc.) is mixed in a hydrocarbon solvent (Isopar^{®}L available for Exxon) and dispersed by milling techniques. The positively charged encapsulated particles obtained are in the form of positively charged encapsulated cyan pigments suspension. The size of the obtained particles is of about 890 nm. The zeta potential of the obtained particles is of about + 16.1 mV.

## Claims

1. A process for producing a positively charged polymer encapsulated particle, having a size of less than 5 µm, comprising a positively charged polymer shell surrounding a core of particle, said process comprising the steps of:
a) dispersing the particles in an aqueous solution;
b) adding a mixture of monomers either before or after the dispersion step (a);
c) polymerizing monomers, with the particles, in view of obtaining polymer encapsulated particles, wherein the polymer shell of said particle comprises polymers or co-polymers that have a functional group FG;
d) then dispersing the encapsulated particles with surfactants and charge directors in view of obtaining positively charged encapsulated particles dispersion,
wherein the charge director is an amphiphilic molecule that can form reversed micelle in non-polar solvents, which are hydrocarbon solvents, and gives charge to the particle surface,
and the functional group FG is a functional group selected from the group consisting of alkylated alcohols, branched alkylated alcohols, amine, substituted amine, substituted or unsubstituted pyrrolidine, substituted or unsubstituted 2-pyrroline, substituted or unsubstituted piperidine, substituted or unsubstituted pyridine, substituted or unsubstituted piperazine, substituted or unsubstituted imidazolidine.

2. The process according to claim 1, wherein the resulting positively charged polymer encapsulated particles have a size which is between from 100 nm to 500 nm in diameter.

3. The process according to claim 1 wherein the particle is an organic or an inorganic pigment colorant.

4. The process according to claim 1 wherein, in the dispersing step (a), the aqueous solution contains water-soluble surface active agents or emulsifiers in amounts sufficient to provide a stable dispersion of the solid particles in water.

5. The process according to claim 1 wherein, in the dispersing step (a), the aqueous solution contains from 0.1 to 25 weight percent of solid particles.

6. The process according to claim 1 wherein the polymerization step (c) is carried out in the presence of radical initiator.

7. The process according to claim 1 wherein the mixture of monomers encompass between 1 wt% and 15 wt% of monomers capable of forming polymer containing FG group, based on the total amount of monomers forming the encapsulation layer.

8. The process according to claim 1 wherein the monomers are selected from the group consisting of N-vinyl amide monomers, heterocyclic vinyl amine monomers, aminoacrylate and methacrylate monomers, acrylamide monomers and derivatives.

9. The process according to claim 1 wherein the monomers are acrylic or methacrylic monomers.

10. The process according to claim 1 wherein in the polymerization step, the ratio monomers to particles is from 0.25:1 to 5:1 .

11. The process according to claim 1 wherein the percentage of FG group present on the shell of the encapsulated particle represents from 0.1 % to 20% of the total weight of the encapsulating polymers or co-polymers.

12. The process according to claim 1 wherein the charge directors are polyisobutylene succinimide amines.

13. Positively charged particles obtained according to the process of claim 1, suitable for use in liquid electrophotographic printing.

14. Positively charged particles obtained according to the process of claim 1, suitable for use in electrophoretic displays.

## Patentansprüche

1. Verfahren zur Herstellung eines positiv geladenen, polymergekapselten Partikels mit einer Größe von weniger als 5 µm, aufweisend einen positiv geladenen Polymermantel, der einen Partikelkern umgibt, wobei das Verfahren die Schritte umfasst:
a) Dispergieren der Partikel in einer wässrigen Lösung;
b) Zugeben einer Mischung von Monomeren entweder vor oder nach dem Schritt (a) des Dispergierens;
c) Polymerisieren von Monomeren mit den Partikeln mit dem Ziel zum Erhalt von polymergekapselten Partikeln, wobei der Polymermantel der Partikel Polymere oder Copolymere aufweist, die eine funktionelle Gruppe FG haben;
d) danach die gekapselten Partikel mit Tensiden und Ladungsdirektoren dispergieren mit dem Ziel zum Erhalt einer Dispersion positiv geladener gekapselter Partikel,
wobei der Ladungsdirektor ein amphiphiles Molekül ist, welches in nichtpolaren Lösemitteln, die Kohlenwasserstoffe sind, eine Umkehrmicelle bilden kann und der Partikeloberfläche Ladung vermittelt,
und die funktionelle Gruppe FG eine funktionelle Gruppe ist, die ausgewählt ist aus der Gruppe bestehend aus alkylierten Alkoholen, verzweigten alkylierten Alkoholen, Amin, substituiertem Amin, substituiertem oder unsubstituiertem Pyrrolidin, substituiertem oder unsubstituiertem 2-Pyrrolidin, substituiertem oder unsubstituiertem Piperidin, substituiertem oder unsubstituiertem Pyridin, substituiertem oder unsubstituiertem Piperazin, substituiertem oder unsubstituiertem Imidazolidin.

2. Verfahren nach Anspruch 1, wobei die resultierenden, positiv geladenen polymergekapselten Partikel eine Größe im Durchmesser von 100 bis 500 nm haben.

3. Verfahren nach Anspruch 1, wobei das Partikel ein organisches oder anorganisches Pigmentfarbmittel ist.

4. Verfahren nach Anspruch 1, wobei im Schritt (a) des Dispergierens die wässrige Lösung wasserlösliche, oberflächenaktive Mittel oder Emulgiermittel in Mengen enthält, die ausreichend sind, um eine stabile Dispersion der Feststoffpartikel in Wasser zu gewähren.

5. Verfahren nach Anspruch 1, wobei im Schritt (a) des Dispergierens die wässrige Lösung 0,1 % bis 25 Gewichtsprozent Feststoffpartikel enthält.

6. Verfahren nach Anspruch 1, wobei der Polymerisationsschritt (c) in Gegenwart eines Radikalinitiators ausgeführt wird.

7. Verfahren nach Anspruch 1, wobei die Mischung der Monomere bezogen auf die Gesamtmenge von Monomeren, die die Verkapselungsschicht bilden, zwischen 1% und 15 Gewichtsprozent von Monomeren umfasst.

8. Verfahren nach Anspruch 1, wobei die Monomere ausgewählt sind aus der Gruppe bestehend aus N-Vinylamid-Monomeren, heterocyclischen Vinylamin-Monomeren, Aminoacrylat- und Methacrylat-Monomeren, Acrylamid-Monomeren und Derivaten.

9. Verfahren nach Anspruch 1, wobei die Monomere acrylische oder methacrylische Monomere sind.

10. Verfahren nach Anspruch 1, wobei in dem Polymerisationsschritt das Verhältnis von Monomeren zu Partikeln 0,25:1 bis 5:1 beträgt.

11. Verfahren nach Anspruch 1, wobei der Prozentanteil der auf dem Mantel der gekapselten Partikel vorhandenen FG-Gruppe 0,1% bis 20% des Gesamtgewichts der gekapselten Polymere oder Copolymere darstellt.

12. Verfahren nach Anspruch 1, wobei die Ladungsdirektoren Polyisobutylensuccinimidamine sind.

13. Positiv geladene, gemäß dem Verfahren nach Anspruch 1 erhaltene Partikel, geeignet für die Verwendung zum nassen elektrophotografischen Drucken.

14. Positiv geladene, gemäß dem Verfahren nach Anspruch 1 erhaltene Partikel, geeignet für die Verwendung in elektrophoretischen Displays.

## Revendications

1. Procédé de production d'une particule encapsulée dans un polymère chargé positivement, présentant une taille inférieure à 5 µm, comprenant une enveloppe polymère entourant un noyau de particule, ledit procédé comprenant les étapes suivantes :
a) dispersion des particules dans une solution aqueuse ;
b) ajout d'un mélange de monomères, avant ou après l'étape de dispersion (a) ;
c) polymérisation de monomères, avec les particules, en vue d'obtenir des particules encapsulées dans un polymère, l'enveloppe polymère de ladite particule comprenant des polymères ou des copolymères ayant un groupe fonctionnel FG ;
d) puis dispersion des particules encapsulées avec des surfactants et des directeurs de charge, en vue d'obtenir une dispersion de particules encapsulées chargées positivement,
le directeur de charge étant une molécule amphiphile capable de former une micelle inversée dans des solvants non polaires, qui sont des solvants hydrocarbures, et donne de la charge à la surface de particule,
et le groupe fonctionnel FG étant un groupe fonctionnel sélectionné parmi le groupe comprenant des alcools alkylés, des alcools alkylés ramifiés, de l'amine, de l'amine substituée, de la pyrrolidine substituée ou non substituée, de la 2-pyrrolidine substituée ou non substituée, de la pipéridine substituée ou non substituée, de la pyridine substituée ou non substituée, de la pipérazine substituée ou non substituée, d'imidazoline substituée ou non substituée.

2. Procédé selon la revendication 1, dans lequel les particules encapsulées dans un polymère chargé positivement résultantes présentent une taille comprise entre 100 nm et 500 nm de diamètre.

3. Procédé selon la revendication 1, dans lequel la particule est un colorant pigmentaire organique ou inorganique.

4. Procédé selon la revendication 1, dans lequel, au cours de l'étape de dispersion (a), la solution aqueuse contient des agents actifs de surface solubles dans l'eau ou des émulsifiants en quantités suffisantes pour fournir une dispersion stable des particules solides dans l'eau.

5. Procédé selon la revendication 1, dans lequel, au cours de l'étape de dispersion (a), la solution aqueuse contient entre 0,1 et 25 pourcent en poids de particules solides.

6. Procédé selon la revendication 1, dans lequel l'étape de polymérisation (c) est exécutée en présence d'un initiateur radicalaire.

7. Procédé selon la revendication 1, dans lequel le mélange de monomères englobe entre 1% en poids et 15% en poids de monomères capables de former un polymère contenant le groupe FG, sur la base de la quantité totale de monomères formant la couche encapsulée.

8. Procédé selon la revendication 1, dans lequel les monomères sont sélectionnés à partir du groupe comprenant des monomères d'amide N-vinylique, des monomères d'amine vinylique hétérocyclique, des monomères d'aminoacrylate et de méthacrylate, des monomères d'acrylamide et des dérivés.

9. Procédé selon la revendication 1, dans lequel les monomères sont des monomères acryliques ou méthacryliques.

10. Procédé selon la revendication 1, dans lequel, au cours de l'étape de polymérisation, le ratio de monomères à particules est compris entre 0,25:1 et 5:1.

11. Procédé selon la revendication 1, dans lequel le pourcentage de groupe FG présent sur l'enveloppe de la particule encapsulée représente entre 0,1% et 20% du poids total des polymères ou copolymères d'encapsulage.

12. Procédé selon la revendication 1, dans lequel les directeurs de charge sont des amines de succinimide de polyisobutylène.

13. Particules chargées positivement, obtenues selon le procédé de la revendication 1, adaptées pour un usage dans l'impression électro-photographique liquide.

14. Particules chargées positivement, obtenues selon le procédé de la revendication 1, adaptées pour un usage dans des écrans électro-phorétiques.
